# EUROPEAN PATENT SPECIFICATION

(11) **EP 3 604 956 B1**
(45) Date of publication and mention of the grant of the patent: **11.09.2024**
(21) Application number: 19185976.8
(22) Date of filing: 12.07.2019
(51) Int. Cl.: F24F 11/54, F24F 1/44, F24F 1/06, F25B 27/00, F25B 30/02, F25B 13/00, F25B 49/02

(54) **AIR CONDITIONER**
KLIMAANLAGE
CLIMATISEUR

(30) Priority: 30.07.2018 JP 2018142634
(43) Date of publication of application: 05.02.2020
(73) Proprietor: Panasonic Intellectual Property Management Co., Ltd., Osaka-shi, Osaka 540-6207 (JP)
(72) Inventor: OHKAWA, Kazunobu, Osaka, 540-6207 (JP); SUITA, Yoshitaka, Osaka, 540-6207 (JP); SAITO, Shingo, Osaka, 540-6207 (JP)
(74) Representative: Eisenführ Speiser

(56) References cited:
- JP-A- 2007 107 859
- JP-A- 2013 061 132
- JP-B2- 5 249 164
- JP-B2- 6 154 331

## Description

### BACKGROUND OF THE INVENTION

### Field of the Invention

The present invention as defined in the claim relates to an air conditioner in which a GHP outdoor unit and an EHP outdoor unit are for combined use.

### Description of the Related Art

In general, there is known an air conditioner in which an indoor unit performs air conditioning by use of an outdoor unit in which a compressor to be driven by a gas engine or the like is mounted and an outdoor unit in which a compressor to be driven by electricity is mounted.

As this air conditioner, there has been heretofore disclosed, for example, an air conditioner including a second outdoor unit including a high-capacity compressor, a four-way valve and an outdoor heat exchanger, a first outdoor unit including a low-capacity compressor, a four-way valve and an outdoor heat exchanger, and an indoor unit connected to these outdoor units via one refrigerant system (e.g., see Patent Literature 1).

A further known air conditioner that includes an indoor unit, a first EHP-type outdoor unit, a second GHP-type outdoor unit and an air conditioner adjustment device, is controlled such that model information, like load related information, is acquired of the first and second outdoor units, to operate the air conditioner such that either one or both of the first and second outdoor units are driven (see Patent Literature 2).

In another known air conditioning apparatus, which includes a plurality of indoor units, a GHP-type outdoor unit and an EHP-type outdoor unit, the GHP-Type outdoor unit is provided with a generator and a battery charged by said generator. In case of an interruption of the commercial power supply, the generator can generate electric power, such that the operation of the air conditioning apparatus may be continued (see Patent Literature 3).

[Patent Literature 1]
   Japanese Patent Laid-Open No. 2017-150687
[Patent Literature 2]
   Japanese Patent Document 5249164
[Patent Literature 3]
   Japanese Patent Document 6154331

However, in the above conventional air conditioner, when operations of a plurality of outdoor units are switched, a controller sends an operation switching instruction. For the respective outdoor units, when the stopped outdoor unit and the operating outdoor unit are switched based on the instruction from the controller, the operating outdoor unit and the stopped outdoor unit perform stopping and operating actions at individual timings.

In this case, when the stopped outdoor unit and the operating outdoor unit are switched, the outdoor unit to be stopped from an operating state immediately stops. However, the outdoor unit to be started from a stopped state cannot immediately start because a predetermined start preparing operation is performed. In this case, air conditioning may be temporarily interrupted, and air conditioning properties may deteriorate.

The present invention has been developed in view of the above described respects, and an object thereof is to provide an air conditioner in which a plurality of outdoor units can be switched without interrupting air conditioning, and deterioration of air conditioning properties can be prevented.

### SUMMARY OF THE INVENTION

To achieve the above object, according to the present invention, there is provided an air conditioner in which each of a plurality of outdoor units is connected to an indoor unit via an interunit pipe, each outdoor unit is operated, and indoor air conditioning is performed by the indoor unit, wherein the plurality of outdoor units comprise a GHP outdoor unit including a GHP compressor that is driven by an engine and an EHP outdoor unit including an EHP compressor that is driven by a commercial power source, wherein the air conditioner includes a controller that sends a control instruction signal to each of the GHP outdoor unit, the EHP outdoor unit and the indoor unit, and wherein the controller includes a controller control section to generally control a GHP control section, an EHP control section and an indoor control section. The GHP control section is set to a master, and the EHP control section and the indoor control section are set to slaves, the control instruction signal from the controller control section is first transmitted to the GHP control section, and this control instruction signal is sequentially transmitted from the GHP control section to the EHP control section and the indoor control section, and when the start of the GHP outdoor unit is completed, the GHP control section sends a stop instruction signal to the EHP control section, and based on this stop instruction signal, the EHP control section controls and stops the EHP outdoor unit.

According to the air conditioner of the present invention, the air conditioning operation can be prevented from being temporarily interrupted, and deterioration of air conditioning properties can be prevented.

### BRIEF DESCRIPTION OF THE DRAWINGS

Fig. 1 is a configuration diagram of an air conditioner according to an embodiment of the present invention;
Fig. 2 is a block diagram showing a control configuration of the present embodiment; and
Fig. 3 is a timing chart showing an operation example of the present embodiment.

### DETAILED DESCRIPTION OF THE PREFERRED EMBODIMENT

According to the present invention, there is provided an air conditioner in which each of a plurality of outdoor units is connected to an indoor unit via an interunit pipe, each outdoor unit is operated and indoor air conditioning is performed by the indoor unit, wherein the plurality of outdoor units comprise a GHP outdoor unit including a GHP compressor that is driven by an engine and an EHP outdoor unit including an EHP compressor that is driven by a commercial power source, wherein the air conditioner includes a controller that sends a control instruction signal to each of the GHP outdoor unit, the EHP outdoor unit and the indoor unit, the controller includes a controller control section to generally control a GHP control section, an EHP control section and an indoor control section, the GHP control section is set to a master, and the EHP control section and the indoor control section are set to slaves, the control instruction signal from the controller control section is first transmitted to the GHP control section, and this control instruction signal is sequentially transmitted from the GHP control section to the EHP control section and the indoor control section, and when the start of the GHP outdoor unit is completed, the GHP control section sends a stop instruction signal to the EHP control section, and based on this stop instruction signal, the EHP control section controls and stops the EHP outdoor unit.

According to this aspect, the plurality of outdoor units can be constituted of the GHP outdoor unit and the EHP outdoor unit. When operations of the GHP outdoor unit and the EHP outdoor unit are switched, the operation of the air conditioning system is not interrupted, and it is possible to continuously operate the air conditioning system. As a result, the deterioration of the air conditioning properties can be prevented.

In an aspect disclosed herein, the air conditioner further includes a controller control section that sends a control instruction signal to the control section, wherein when receiving a switching instruction signal of the outdoor unit from the controller control section, the control section of the outdoor unit that is stopped controls and starts the outdoor unit that is stopped, and the control section of the outdoor unit that is operating controls and stops the outdoor unit.

According to this aspect, based on the switching instruction signal sent from the controller control section, the control section of the outdoor unit that is stopped starts the outdoor unit that is stopped, and the control section of the outdoor unit that is operating stops the outdoor unit. Therefore, regardless of the switching instruction signal sent from the controller control section, the control section of each outdoor unit can control the start and stop of the outdoor unit so that the operation of the air conditioning system is not interrupted. As a result, it is possible to continuously operate the air conditioning system, and the deterioration of the air conditioning properties can be prevented.

Hereinafter, description will be made as to an embodiment of the present invention with reference to the drawings.

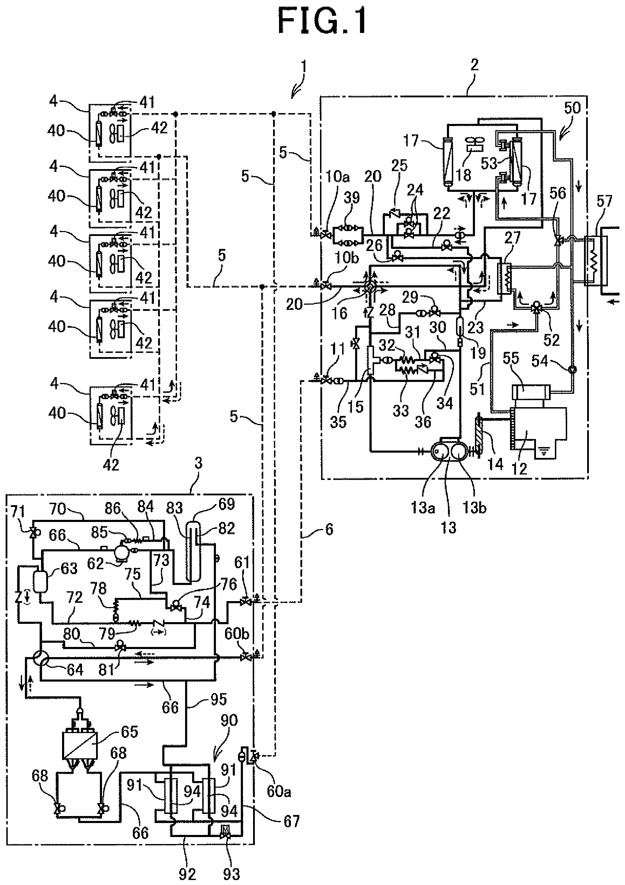

Fig. 1 is a configuration diagram showing the embodiment of an air conditioner according to the present invention.

As shown in Fig. 1, an air conditioner 1 includes a GHP outdoor unit 2 (a second outdoor unit) including a compressor that is driven as a high capacity compressor by a gas engine, an EHP outdoor unit 3 (a first outdoor unit) including a compressor that is driven as a low capacity compressor by a commercial power source, and a plurality of indoor units 4. The GHP outdoor unit 2, the EHP outdoor unit 3 and the respective indoor units 4 are connected via an interunit pipe 5 and an oil balance pipe 6. Consequently, a refrigeration cycle circuit to perform an air conditioning operation is constituted.

The GHP outdoor unit 2 includes two external connection valves 10a and 10b to be connected to the external interunit pipe 5 and an oil connection valve 11 to be connected to the oil balance pipe 6.

In the GHP outdoor unit 2, there are provided the gas engine 12 as an engine, and a GHP compressor 13 that compresses a refrigerant by a drive force of the gas engine 12. The GHP compressor 13 is constituted of a first GHP compressor 13a and a second GHP compressor 13b that are provided in parallel.

The gas engine 12 burns a mixed gas of a fuel such as a gas supplied through a fuel regulating valve (not shown) and air supplied through a throttle valve (not shown) to generate the drive force.

A drive belt 14 is bridged between an output shaft of the gas engine 12 and a driven shaft of the GHP compressor 13, and the drive force of the gas engine 12 is transmitted via the drive belt 14, to drive the GHP compressor 13.

An oil separator 15, a four-way valve 16 and two outdoor heat exchangers 17 and 17 are successively connected to a discharge side of the GHP compressor 13, and each outdoor heat exchanger 17 is connected to one external connection valve 10a via a refrigerant pipe 20. An outdoor fan 18 to exchange heat between the outdoor heat exchanger 17 and outdoor air is provided in the vicinity of the outdoor heat exchanger 17.

Furthermore, the other external connection valve 10b is connected to the refrigerant pipe 20. A middle portion of this refrigerant pipe 20 is connected to a suction side of the GHP compressor 13 via the four-way valve 16 and an accumulator 19.

Electric valves 24 and a check valve 25 are connected in parallel with the middle portion of the refrigerant pipe 20, and the refrigerant pipe 20 is connected to a liquid pipe 22 connected to an inflow side of the accumulator 19. A dry core 39 is provided between the outdoor heat exchanger 17 and the external connection valve 10a.

Furthermore, a heat exchange refrigerant pipe 23 that connects the suction side of the GHP compressor 13 to the refrigerant pipe 20 is connected between the suction side of the GHP compressor 13 and the refrigerant pipe 20, and in this heat exchange refrigerant pipe 23, an electric valve 26 is provided. A plate type heat exchanger 27 is provided between the electric valve 26 of the heat exchange refrigerant pipe 23 and the suction side of the GHP compressor 13.

The GHP outdoor unit 2 includes a bypass pipe 28 that connects a discharge side of the GHP compressor 13 to the suction side thereof. One end of the bypass pipe 28 is connected between the oil separator 15 and the four-way valve 16, and the other end of the bypass pipe 28 is connected between the accumulator 19 and the four-way valve 16. A part of the refrigerant on the discharge side of the GHP compressor 13 flows through the bypass pipe 28 to the suction side of the GHP compressor 13 due to a pressure difference.

In the bypass pipe 28, a bypass valve 29 that regulates a flow rate of the bypass pipe 28 is provided. The bypass valve 29 is an electric valve that can open and close stepwise.

The GHP outdoor unit 2 includes an oil return pipe 30 that connects the oil separator 15 to the suction side of the GHP compressor 13. Lubricating oil stored in the oil separator 15 flows through the oil return pipe 30 to the suction side due to the pressure difference between the discharge side and the suction side of the GHP compressor 13.

The oil return pipe 30 includes a first return pipe 31 that connects an oil outflow port of the oil separator 15 to the suction side of the GHP compressor 13, and a second return pipe 36 provided in parallel to the first return pipe 31.

The first return pipe 31 includes a capillary tube 32.

The second return pipe 36 is connected to the first return pipe 31 to pass by the capillary tube 32. One end of the second return pipe 36 is connected to an upstream side of the capillary tube 32 in the first return pipe 31, and the other end of the second return pipe 36 is connected to a downstream side of the capillary tube 32 in the first return pipe 31.

The second return pipe 36 includes a capillary tube 33, and an oil return valve 34 provided on a downstream side of the capillary tube 33.

The oil connection valve 11 is connected to an oil pipe 35. A middle portion of the oil pipe 35 is branched, so that one oil pipe is connected to the downstream side from the oil separator 15 of the refrigerant pipe 20, and the other oil pipe is connected between the capillary tube 33 of the second return pipe 36 and the oil return valve 34.

The external connection valve 10a connected to the refrigerant pipe 20 is connected to one end of an indoor heat exchanger 40 of each indoor unit 4 via the interunit pipe 5. An expansion valve 41 is provided in a middle portion of the interunit pipe 5.

In each indoor unit 4, an indoor fan 42 is provided to exchange heat between the indoor heat exchanger 40 and indoor air.

Furthermore, the other end of each indoor heat exchanger 40 is connected via the interunit pipe 5 to the external connection valve 10b connected to the refrigerant pipe 20.

Furthermore, the GHP outdoor unit 2 includes a cooling water circuit 50 of the gas engine 12.

The cooling water circuit 50 includes a cooling water three-way valve 52, the plate type heat exchanger 27, a radiator 53 disposed close to the one outdoor heat exchanger 17, a cooling water pump 54, and an exhaust gas heat exchanger 55 of the gas engine 12, which are connected in order from the gas engine 12 via a cooling water pipe 51. The cooling water pump 54 is driven, to circulate cooling water through this circuit.

The cooling water pipe 51 of the cooling water circuit 50 is shown by a double line in Fig. 1, and flow of the cooling water is shown by a solid arrow line.

In the radiator 53, heat is exchanged between the outdoor air and the cooling water.

Furthermore, in the plate type heat exchanger 27, the electric valve 26 is operated so that the refrigerant that returns to the GHP compressor 13 is heated by the cooling water that flows through the cooling water pipe 51. Consequently, a low pressure of the refrigerant rises, and a heating efficiency improves.

The cooling water circuit 50 can form a first route in which the cooling water flows in order from the gas engine 12 through the cooling water three-way valve 52, the radiator 53, the cooling water pump 54, and the exhaust gas heat exchanger 55 to the gas engine 12.

Furthermore, the cooling water circuit 50 can form a second route in which the cooling water flows in order from the gas engine 12 through the cooling water three-way valve 52, the plate type heat exchanger 27, the cooling water pump 54 and the exhaust gas heat exchanger 55 to the gas engine 12.

In a middle of the first route that connects the radiator 53 to the cooling water three-way valve 52, a hot water three-way valve 56 is provided. The hot water three-way valve 56 is connected to a hot water heat exchanger 57 that exchanges heat between the cooling water and hot water, and the cooling water that flows through the hot water heat exchanger 57 is returned to an upstream side of the cooling water pump 54.

Next, description will be made as to the EHP outdoor unit 3.

The EHP outdoor unit 3 includes two external connection valves 60 to be connected to the external interunit pipe 5 and an oil connection valve 61 to be connected to the oil balance pipe 6.

The EHP outdoor unit 3 includes the EHP compressor 62 to be driven by the commercial power source. It is considered that an example of this EHP compressor 62 is an inverter type compressor that can vary an output.

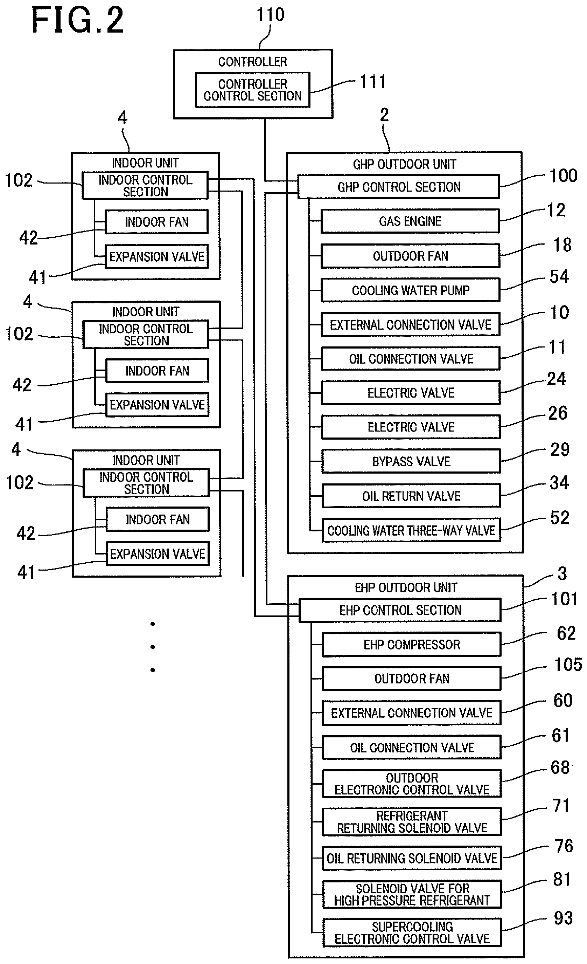

A discharge side of the EHP compressor 62 is connected to an oil separator 63, a four-way valve 64 and two outdoor heat exchangers 65 and 65 in order, and the outdoor heat exchanger 65 is connected to one external connection valve 60a via a refrigerant pipe 66. In the vicinity of the outdoor heat exchanger 65, an outdoor fan 105 (see Fig. 2) is provided to exchange heat between the outdoor heat exchanger 65 and the outdoor air.

A supercooling heat exchanger 90 is provided between the outdoor heat exchanger 65 and the external connection valve 60a.

Two systems of pipe lines are formed in the outdoor heat exchanger 65, and the refrigerant pipe 66 on a four-way valve 64 side and the refrigerant pipe 66 on a supercooling heat exchanger 90 side are respectively branched and connected to the outdoor heat exchanger 65. Furthermore, outdoor electronic control valves 68 and 68 are provided in the refrigerant pipe 66 on the supercooling heat exchanger 90 side of the outdoor heat exchanger 65.

The supercooling heat exchanger 90 includes two heat exchange units 91 and 91. The refrigerant pipe 66 on an outdoor heat exchanger 65 side and a refrigerant pipe 67 on an external connection valve 60a side are respectively branched and connected to each heat exchange unit 91 of the supercooling heat exchanger 90.

In the present embodiment, each heat exchange unit 91 is a double pipe type heat exchanger. Outer pipes of the heat exchange units 91 are connected to the refrigerant pipe 66 on the outdoor heat exchanger 65 side and the refrigerant pipe 67 on the external connection valve 60a side, respectively.

A middle portion of the refrigerant pipe 67 that connects the supercooling heat exchanger 90 to the external connection valve 60a is connected to a supercooling branch pipe 92. A middle portion of this supercooling branch pipe 92 is connected to an inner pipe 94 of each heat exchange unit 91 via a supercooling electronic control valve 93. The refrigerant that flows through the inner pipe 94 of the heat exchange unit 91 is returned to the refrigerant pipe 66 between the four-way valve 64 and an accumulator 69 via a supercooling refrigerant pipe 95.

The other external connection valve 60b is connected to a suction side of the EHP compressor 62 via the refrigerant pipe 66, and the four-way valve 64 and the accumulator 69 are provided in a middle portion of the refrigerant pipe 66.

Furthermore, a middle portion of the refrigerant pipe 66 which is between the EHP compressor 62 and the oil separator 63 is provided with a refrigerant return pipe 70 branched and connected to the refrigerant pipe 66 between the EHP compressor 62 and the accumulator 69. A refrigerant returning solenoid valve 71 is provided in a middle portion of the refrigerant return pipe 70. Then, when the refrigerant returning solenoid valve 71 is opened, a part of the refrigerant does not circulate in a refrigeration cycle and is guided to the suction side of the EHP compressor 62.

Additionally, a lower portion of the oil separator 63 is connected to an oil pipe 72, and a middle portion of the oil pipe 72 is connected to an oil return pipe 73 connected to the suction side of the EHP compressor 62. The oil return pipe 73 includes two branch pipes 74 and 75 that branch from the oil pipe 72, one branch pipe 74 is provided with an oil return valve 76, and the other branch pipe 75 is provided with a capillary tube 78. Furthermore, a capillary tube 79 is provided between connection portions of the oil pipe 72 to the respective branch pipes 74 and 75.

A middle portion of the refrigerant pipe 66 which is between the oil separator 63 and the four-way valve 64 is connected to a high pressure refrigerant pipe 80 midway branched and connected to a middle portion of the oil pipe 72. A middle portion of the high pressure refrigerant pipe 80 is provided with a solenoid valve 81 for a high pressure refrigerant.

Furthermore, the accumulator 69 includes an inflow pipe 82 into which the refrigerant of the refrigerant pipe 66 flows, and an outflow pipe 83 that sends an inner gas refrigerant of the accumulator 69 to the EHP compressor 62. The outflow pipe 83 is configured to open in an inner upper portion of the accumulator 69, and to send, to the EHP compressor 62, a gas refrigerant accumulated in the inner upper portion of the accumulator 69.

Additionally, the EHP compressor 62 is connected to an overflow pipe 84 connected to the suction side of the EHP compressor 62. In this overflow pipe 84, a strainer 85 and a throttle 86 to decompress oil are incorporated.

The external connection valve 60a of the EHP outdoor unit 3 is connected to one end of the interunit pipe 5, and the other end of this interunit pipe 5 is connected to a middle portion of the interunit pipe 5 which connects the external connection valve 10a of the GHP outdoor unit 2 to the indoor unit 4. The external connection valve 60b connected to a refrigerant pipe of the EHP outdoor unit 3 is connected to one end of the interunit pipe 5, and the other end of this interunit pipe 5 is connected to a middle portion of the interunit pipe 5 which connects the external connection valve 10b of the GHP outdoor unit 2 to the indoor unit 4.

Furthermore, the oil connection valve 61 of the EHP outdoor unit 3 is connected to the oil connection valve 11 of the GHP outdoor unit 2 via the oil balance pipe 6. Consequently, the GHP compressor 13 of the GHP outdoor unit 2 and the EHP compressor 62 of the EHP outdoor unit 3 can supply the oil to each other via the oil balance pipe 6, and balance of an oil amount can be held between the GHP compressor 13 of the GHP outdoor unit 2 and the EHP compressor 62 of the EHP outdoor unit 3.

Then, when a cooling operation is performed, the refrigerant flows as shown by a solid arrow line in Fig. 1, and when a heating operation is performed, the refrigerant flows as shown by a broken line in Fig. 1.

Next, description will be made as to a control configuration of the air conditioner of the present embodiment. Fig. 2 is a block diagram showing the control configuration in the present embodiment.

As shown in Fig. 2, in the present embodiment, the GHP outdoor unit 2 includes a GHP control section 100 as a control section, and the EHP outdoor unit 3 includes an EHP control section 101 as a control section. Furthermore, each of the indoor units 4 includes an indoor control section 102.

Furthermore, in the present embodiment, the air conditioner includes a controller 110 that sends a control instruction signal to each of the GHP outdoor unit 2, the EHP outdoor unit 3 and the indoor unit 4.

The controller 110 includes a controller control section 111 to generally control the GHP control section 100, the EHP control section 101 and the indoor control section 102.

Each of the GHP control section 100, the EHP control section 101, the indoor control section 102 and the controller control section 111 includes, for example, a computation processing circuit such as a CPU, memories such as a ROM and a RAM, and others, and executes a predetermined program to perform predetermined control.

The GHP control section 100 is configured to perform drive control of the gas engine 12, the outdoor fan 18 and the cooling water pump 54 of the GHP outdoor unit 2, and to perform opening and closing control or opening degree control of the external connection valves 10a and 10b, the oil connection valve 11, the electric valve 24, the electric valve 26, the bypass valve 29, the oil return valve 34 and the cooling water three-way valve 52 of the GHP outdoor unit 2.

The EHP control section 101 is configured to perform drive control of the EHP compressor 62 and the outdoor fan 105 of the EHP outdoor unit 3, and to perform opening and closing control or opening degree control of the external connection valves 60a and 60b, the oil connection valve 61, the outdoor electronic control valve 68, the refrigerant returning solenoid valve 71, the oil return valve 76, the solenoid valve 81 for the high pressure refrigerant and the supercooling electronic control valve 93 of the EHP outdoor unit 3.

The indoor control section 102 is configured to perform drive control of the indoor fan 42 of each indoor unit 4, and to perform opening degree control of the expansion valve 41 of the indoor unit 4.

These control operations of the GHP control section 100, the EHP control section 101 and the indoor control section 102 are performed based on the control instruction signal sent from the controller control section 111.

At this time, in the present embodiment, the GHP control section 100 is set to a master, and the EHP control section 101 and the indoor control section 102 are set to slaves. The control instruction signal from the controller control section 111 is first transmitted to the GHP control section 100, and this control instruction signal is sequentially transmitted from the GHP control section 100 to the EHP control section 101 and the indoor control section 102.

In the present embodiment, each of the GHP outdoor unit 2 and the EHP outdoor unit 3 regulates an output in accordance with a cooling load. For example, when the cooling load is a low load, the EHP outdoor unit 3 is driven, and as the cooling load increases, the EHP outdoor unit 3 is stopped, and the GHP outdoor unit 2 is started. When the cooling load is a high load, the GHP outdoor unit 2 is driven, and additionally the EHP outdoor unit 3 is driven.

The controller 110 controls the GHP outdoor unit 2, the EHP outdoor unit 3 and the indoor unit 4 based on a number of the indoor units 4 to be operated, a set temperature, an outdoor air temperature, and the like. Consequently, a control signal is output to each of the GHP control section 100, the EHP control section 101 and the indoor control section 102 so that an operation of the GHP outdoor unit 2 and an operation of the EHP outdoor unit 3 save energy most. In consequence, it is configured that the GHP control section 100 efficiently controls the operation of the GHP outdoor unit 2, the EHP control section 101 efficiently controls the operation of the EHP outdoor unit 3, and the indoor control section 102 efficiently controls the operation of the indoor unit 4.

In this case, in the present embodiment, when the controller control section 111 switches the operations of the GHP outdoor unit 2 and the EHP outdoor unit 3, the controller control section sends a switching instruction signal to each of the GHP control section 100 and the EHP control section 101.

For example and according to the invention, during the operation of the EHP outdoor unit 3, when the EHP outdoor unit 3 is stopped to switch the operation to the operation of the GHP outdoor unit 2, the controller control section 111 sends, to the GHP control section 100, a start instruction signal to start the GHP outdoor unit 2. Then, based on the start instruction signal from the controller control section 111, the GHP control section 100 starts the gas engine 12 of the GHP outdoor unit 2, and starts the GHP outdoor unit 2.

When the start of the GHP outdoor unit 2 is completed, the GHP control section sends a stop instruction signal to the EHP control section, and based on this stop instruction signal, the EHP control section 101 controls and stops the EHP outdoor unit 3.

Furthermore, during the operation of the GHP outdoor unit 2, when the GHP outdoor unit 2 is stopped to switch the operation to the operation of the EHP outdoor unit 3, the controller control section 111 sends the start instruction signal of the EHP outdoor unit to the GHP control section, and the GHP control section sends the start instruction signal from the controller control section to the EHP control section. Consequently, based on the start instruction signal, the EHP control section 101 starts the EHP compressor 62 of the EHP outdoor unit 3, and starts the EHP outdoor unit 3.

Then, when the GHP control section monitors a start state of the EHP outdoor unit and determines that the start of the EHP outdoor unit is completed, the GHP control section 100 controls and stops the GHP outdoor unit 2.

In consequence, the operation does not temporarily stop, and a continuous operation is possible.

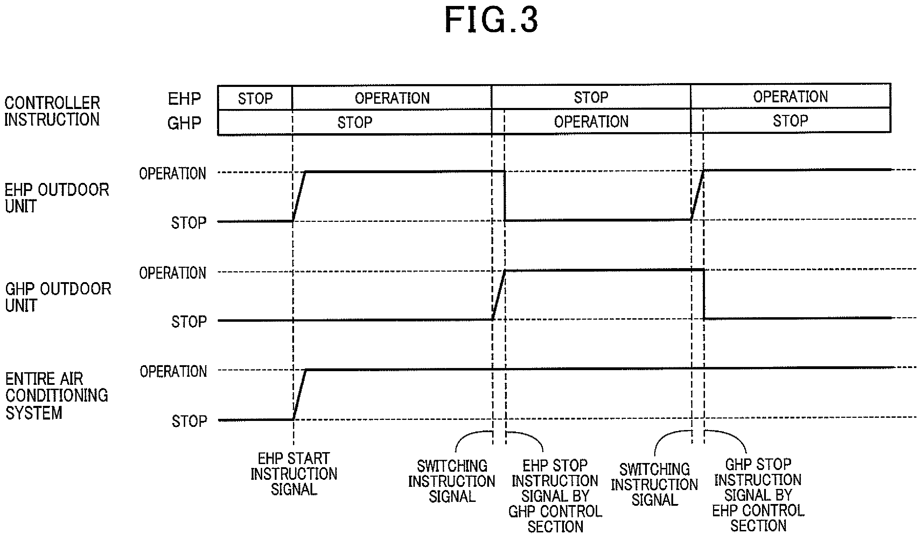

Next, description will be made as to an operation of an air conditioner with reference to a timing chart shown in Fig. 3.

Fig. 3 shows a timing chart example of the operation and stop of each of the GHP outdoor unit 2 and the EHP outdoor unit 3.

As shown in Fig. 3, description is first made as to a case where the EHP outdoor unit 3 is started from a state where the GHP outdoor unit 2 and the EHP outdoor unit 3 are stopped.

The controller control section 111 sends the start instruction signal to the EHP control section 101, and based on the start instruction signal, the EHP control section 101 starts the EHP compressor 62. In this state, an operation of the air conditioning system is started.

Then, when the operation is switched to the operation of the GHP outdoor unit 2 from a state where the EHP outdoor unit 3 is operated, the controller control section 111 sends, to the GHP control section 100, the start instruction signal to start the GHP outdoor unit 2. Then, based on the start instruction signal from the controller control section 111, the GHP control section 100 starts the gas engine 12 of the GHP outdoor unit 2, and starts the GHP outdoor unit 2. When the start of the GHP outdoor unit 2 is completed, the GHP control section sends the stop instruction signal to the EHP control section, and based on this stop instruction signal, the EHP control section 101 stops the EHP outdoor unit 3.

In consequence, when the operation is switched from the EHP outdoor unit 3 to the GHP outdoor unit 2, the air conditioning system can be continuously operated without interrupting the operation of the air conditioning system.

Furthermore, when the EHP outdoor unit 3 is started from a state where the GHP outdoor unit 2 is operated and the EHP outdoor unit 3 is stopped, the controller control section 111 sends the start instruction signal of the EHP outdoor unit to the GHP control section, and the GHP control section sends the start instruction signal from the controller control section to the EHP control section. Consequently, based on the start instruction signal, the EHP control section 101 starts the EHP compressor 62 of the EHP outdoor unit 3, and starts the EHP outdoor unit 3.

Then, when the GHP control section monitors a start state of the EHP outdoor unit and determines that the start of the EHP outdoor unit is completed, the GHP control section 100 stops the GHP outdoor unit 2.

In consequence, also when the operation is switched from the GHP outdoor unit 2 to the EHP outdoor unit 3, the air conditioning system can be continuously operated without interrupting the operation of the air conditioning system.

As described above, the air conditioner includes the controller control section 111 that sends the control instruction signal to each of the GHP control section 100 and the EHP control section 101. When receiving the switching instruction signal of the GHP outdoor unit 2 or the EHP outdoor unit 3 from the controller control section 111, the GHP control section 100 or the EHP control section 101 starts the GHP outdoor unit 2 or the EHP outdoor unit 3 that is stopped. When the start of the GHP outdoor unit 2 or the EHP outdoor unit 3 is completed, the GHP control section 100 or the EHP control section 101 of the GHP outdoor unit 2 or the EHP outdoor unit 3 controls and stops the GHP outdoor unit 2 or the EHP outdoor unit 3 that is operating.

Consequently, after the start of the GHP outdoor unit 2 or the EHP outdoor unit 3 is completed, the GHP control section 100 or the EHP control section 101 of the outdoor unit that is operating stops the GHP outdoor unit 2 or the EHP outdoor unit 3. Therefore, regardless of the switching instruction signal from the controller control section 111, the GHP control section 100 or the EHP control section 101 can control the start and the stop of the GHP outdoor unit 2 or the EHP outdoor unit 3 without interrupting the operation of the air conditioning system. As a result, the air conditioning system can be continuously operated, and deterioration of air conditioning properties can be prevented.

Note that the above embodiment illustrates one aspect to which the present invention is applied, and the present invention is only limited by the scope of the appended claim.

According to the invention, the plurality of outdoor units comprise a GHP outdoor unit 2 and an EHP outdoor unit 3.

As described above, the air conditioner according to the present invention can be preferably utilized as an air conditioner in which when a plurality of outdoor units are switched and operated, each outdoor unit can be continuously operated without stopping the operation.

- 1: air conditioner
- 2: GHP outdoor unit
- 3: EHP outdoor unit
- 4: indoor unit
- 12: gas engine
- 13: GHP compressor
- 15: oil separator
- 17 and 65: outdoor heat exchanger
- 40: indoor heat exchanger
- 62: EHP compressor
- 100: GHP control section
- 101: EHP control section
- 102: indoor control section
- 110: controller
- 111: controller control section

## Claims

1. An air conditioner (1) in which each of a plurality of outdoor units (2, 3) is connected to an indoor unit (4) via an interunit pipe (5), each outdoor unit (2, 3) is operated and indoor air conditioning is performed by the indoor unit (4),
wherein the plurality of outdoor units (2, 3) comprise a GHP outdoor unit (2) including a GHP compressor (13) that is driven by an engine (12) and an EHP outdoor unit (3) including an EHP compressor (62) that is driven by a commercial power source,
wherein the air conditioner (1) includes a controller (110) that sends a control instruction signal to each of the GHP outdoor unit (2), the EHP outdoor unit (3) and the indoor unit (4), and
wherein the controller (110) includes a controller control section (111) configured to generally control a GHP control section (100), an EHP control section (101) and an indoor control section (102),
**characterized in that** the controller control section (111) is configured to set the GHP control section (100) to a master, and to set the EHP control section (101) and the indoor control section (102) to slaves, to transmit the control instruction signal from the controller control section (111) first to the GHP control section (100), and to transmit this control instruction signal is sequentially from the GHP control section (100) to the EHP control section (101) and the indoor control section (102), wherein during operation of the EHP outdoor unit (3) the controller control section(111) is further configured to send a start signal to start the GHP outdoor unit (2), and
when the start of the GHP outdoor unit (2) is completed, the GHP control section (100) is configured to send a stop instruction signal to the EHP control section (101), and based on this stop instruction signal, the EHP control section (101) is configured to control and to stop the EHP outdoor unit (3).

## Patentansprüche

1. Klimaanlage (1), in der jede von einer Vielzahl von Außeneinheiten (2, 3) mit einer Innenraumeinheit (4) über eine Verbindungsleitung (5) verbunden ist, wobei jede Außeneinheit (2, 3) betrieben wird und die Innenklimatisierung von der Innenraumeinheit (4) ausgeführt wird,
wobei die Vielzahl von Außeneinheiten (2, 3) eine GHP-Außeneinheit (2), die einen GHP-Verdichter (13) aufweist, der von einem Motor (12) angetrieben wird, und eine EHP-Außeneinheit (3), die einen EHP-Verdichter (62) aufweist, der von einer kommerziellen Stromquelle angetrieben wird, umfasst,
wobei die Klimaanlage (1) eine Steuereinrichtung (110) umfasst, die ein Steuerbefehlssignal an jede von der GHP-Außeneinheit (2), der EHP-Außeneinheit (3) und der Innenraumeinheit (4) sendet, und
wobei die Steuereinrichtung (110) einen Steuereinrichtungssteuerabschnitt (111) umfasst, der dazu ausgelegt ist, allgemein einen GHP-Steuerabschnitt (100), einen EHP-Steuerabschnitt (101) und einen Innenraum-Steuerabschnitt (102) zu steuern,
**dadurch gekennzeichnet, dass** der Steuereinrichtungssteuerabschnitt (111) dazu ausgelegt ist, den GHP-Steuerabschnitt (100) als Master einzustellen und den EHP-Steuerabschnitt (101) und den Innenraum-Steuerabschnitt (102) als Slaves einzustellen, das Steuerbefehlssignal von dem Steuereinrichtungssteuerabschnitt (111) zuerst an den GHP-Steuerabschnitt (100) zu übermitteln und dieses Steuerbefehlssignal sequenziell von dem GHP-Steuerabschnitt (100) an den EHP-Steuerabschnitt (101) und den Innenraum-Steuerabschnitt (102) zu übermitteln, wobei während des Betriebs der EHP-Außeneinheit (3) der Steuereinrichtungssteuerabschnitt (111) ferner dazu ausgelegt ist, ein Startsignal zu senden, um die GHP-Außeneinheit (2) zu starten, und
wenn der Start der GHP-Außeneinheit (2) abgeschlossen ist, der GHP-Steuerabschnitt (100) dazu ausgelegt ist, ein Stoppbefehlssignal an den EHP-Steuerabschnitt (101) zu senden, und auf der Grundlage dieses Stoppbefehlssignals der EHP-Steuerabschnitt (101) dazu ausgelegt ist, die EHP-Außeneinheit (3) zu steuern und zu stoppen.

## Revendications

1. Climatiseur (1), dans lequel chacune d'une pluralité d'unités extérieures (2, 3) est reliée à une unité intérieure (4) par l'intermédiaire d'un tuyau inter-unité (5), chaque unité extérieure (2, 3) est actionnée et la climatisation intérieure est effectuée par l'unité intérieure (4),
la pluralité d'unités extérieures (2, 3) comprenant une unité extérieure GHP (2) incluant un compresseur GHP (13) qui est entraîné par un moteur (12) et une unité extérieure EHP (3) incluant un compresseur EHP (62) qui est entraîné par une source d'alimentation commerciale,
le climatiseur (1) incluant un dispositif de commande (110) qui envoie un signal d'instruction de commande à chacune de l'unité extérieure GHP (2), de l'unité extérieure EHP (3) et de l'unité intérieure (4) et
le dispositif de commande (110) incluant une section de commande (111) de dispositif de commande conçue pour commander généralement une section de commande GHP (100), une section de commande EHP (101) et une section de commande intérieure (102),
**caractérisé en ce que** la section de commande (111) de dispositif de commande est conçue pour régler la section de commande GHP (100) en maître, et pour régler la section de commande EHP (101) et la section de commande intérieure (102) en esclaves, pour transmettre le signal d'instruction de commande à partir de la section de commande (111) de dispositif de commande d'abord à la section de commande GHP (100) et pour transmettre ce signal d'instruction de commande séquentiellement à partir de la section de commande GHP (100) à la section de commande EHP (101) et à la section de commande intérieure (102), où, pendant le fonctionnement de l'unité extérieure EHP (3), la section de commande (111) de dispositif de commande est en outre conçue pour envoyer un signal de démarrage afin de démarrer l'unité extérieure GHP (2) et
lorsque le démarrage de l'unité extérieure GHP (2) est achevé, la section de commande GHP (100) est conçue pour envoyer un signal d'instruction d'arrêt à la section de commande EHP (101) et sur la base de ce signal d'instruction d'arrêt, la section de commande EHP (101) est conçue pour commander et arrêter l'unité extérieure EHP (3).
